**Europäisches Patentamt**

**European Patent Office**

**Office européen des brevets**

(19)

(11) Numéro de publication : **0 458 692 B1**

(12)

# FASCICULE DE BREVET EUROPEEN

(45) Date de publication du fascicule du brevet :
**23.06.93 Bulletin 93/25**

(51) Int. Cl.⁵ : **G09G 1/06**, G06F 15/72

(21) Numéro de dépôt : **91401302.4**

(22) Date de dépôt : **21.05.91**

(54) **Procédé de visualisation d'une partie de l'image d'une structure physique.**

(30) Priorité : **25.05.90 FR 9006513**

(43) Date de publication de la demande :
**27.11.91 Bulletin 91/48**

(45) Mention de la délivrance du brevet :
**23.06.93 Bulletin 93/25**

(84) Etats contractants désignés :
**DE GB NL**

(56) Documents cités :
**EP-A- 0 145 046**
**COMPUTER VISION, GRAPHICS, AND IMAGE PROCESSING vol. 48, 1989, NEW YORK, US pages 190 - 216; L.-S. CHEN ET AL.: 'Representation, display and manipulation of 3D digital scenes and their medical applications '**

(73) Titulaire : **GENERAL ELECTRIC CGR S.A.**
**100, rue Camille-Desmoulins**
**F-92130 Issy les Moulineaux (FR)**

(72) Inventeur : **Knoplioch, Jérôme**
**Cabinet Ballot-Schmit, 7, rue Le Sueur**
**F-75116 Paris (FR)**
Inventeur : **Prevost, Guy**
**Cabinet Ballot-Schmit, 7, rue Le Sueur**
**F-75116 Paris (FR)**
Inventeur : **Treil, Nicolas**
**Cabinet Ballot-Schmit, 7, rue Le Sueur**
**F-75116 Paris (FR)**

(74) Mandataire : **Schmit, Christian Norbert Marie et al**
**Cabinet Ballot-Schmit 7, rue Le Sueur**
**F-75116 Paris (FR)**

## Description

La présente invention a pour objet un procédé de visualisation de l'image d'une partie d'une structure physique. Elle est plus particulièrement utilisable dans le domaine médical où on cherche à montrer des parties d'images de tissus humains dans des buts de diagnostic. Elle a pour principal objet de permettre une visualisation très rapide de la structure à montrer. Elle concerne essentiellement la visualisation, sous forme de vues, des structures, avec éventuellement des effets de perspective, de manière à faire apparaître des parties des structures montrées comme si elles avaient été disséquées dans les corps des patients. Compte tenu de la rapidité avec laquelle la méthode permet de montrer les images de ces structures interne elle serait applicable à d'autres domaines, notamment en contrôle industriel.

Pour visualiser une partie d'une structure, contenue à l'intérieur de cette structure, il existe différents procédés. Néanmoins, tous les procédés partent d'une connaissance dite en volume de la structure à étudier. Une structure est ainsi normalement décrite par une collection d'élément de volume, ou voxels, chaque voxel étant représentatif, d'une part, d'un lieu dans un espace à trois dimensions à l'intérieur de la structure, et d'autre part d'au moins une valeur de grandeur physique représentative de la structure en ce lieu de l'espace. Selon la finesse des voxels on dira que l'image de la structure est résolue plus ou moins finement. En ce qui concerne le phénomène physique, dans le domaine médical il s'agit essentiellement de densité radiologique moyenne du voxel lorsque l'étude a comporté le passage du patient dans un tomodensitomètre à rayons X. Lorsqu'un appareil à résonance magnétique nucléaire est utilisé il s'agit essentiellement de mesurer la teneur en hydrogène de chaque voxel. Dans une étude par ultra-sons on mesure pour chaque voxel l'aptitude à rétrodiffuser les ondes acoustiques. Avec des mesures faites au moyen d'une gamma caméra on mesure essentiellement les fonctions métaboliques vis à vis d'un marqueur radioactif. D'autres procédés d'investigations sont par ailleurs envisageables. L'invention concerne tous les procédés d'investigation qui conduisent à la connaissance d'au moins une grandeur physique dans chaque voxel de la structure.

Avec les traitements d'image dont il est question dans la présente invention on associe à chaque voxel un mot mémoire dans une mémoire. Cette mémoire est représentative de la structure; des adresses de mots mémoires dans la mémoire correspondent aux lieux dans l'espace à trois dimensions des voxels. Les informations stockées dans chacun des mots mémoires sont représentatives en valeur, des grandeurs physiques mesurées à l'endroit des voxels concernés. Dans la suite de cet exposé, une telle mémoire sera dite mémoire originale.

Pour visualiser une partie d'une structure, on commence par effectuer une segmentation : on sépare, dans la structure, les voxels ou les mots mémoires appartenant à la partie à voir de ceux que l'on ne veut pas montrer. Cette segmentation peut consister à trier les mots mémoires en fonction de la valeur de l'information qui est stockée. Si cette valeur d'information est comprise par exemple dans une fenêtre de valeur, ou bien si elle est inférieure ou supérieure à un seuil, on pourra considérer que le mot mémoire (et respectivement le voxel correspondant) appartient à la partie à visualiser. Dans ce cas, on lui attribue en outre une valeur d'un bit : dans un exemple on lui donnera une valeur 1. Dans le cas contraire on dira que le mot mémoire n'appartient pas à la structure et on lui donnera comme valeur d'information la valeur complémentaire : par exemple 0. Un mot mémoire est maintenant défini par son adresse, la valeur de la grandeur physique mesurée à l'endroit du voxel correspondant, et une valeur binaire, valeur 1 ou valeur 0, selon que le voxel correspondant a été jugé comme appartenant ou non à la structure de la partie montrée.

L'opération de visualisation proprement dite consiste ensuite à visiter l'image de la structure, c'est à dire à explorer tous les différents mots mémoires de la mémoire originale, en fonction d'une direction d'observation. On cherche à voir si ces mots mémoires appartiennent ou non à la partie et s'ils sont par ailleurs situés ou non à la surface de cette partie. Le cas échéant on les montrera ou non dans l'image. Pour effectuer cette opération divers procédés sont connus. Un procédé le plus connu, et auquel on reconnaît la plus grande performance de traitement en temps réel, est le procédé dit de type OCTREE. Un exemple de mise en oeuvre de ce procédé est décrit dans le brevet américain US-A-4 719 585. Dans ce procédé, une fois que la segmentation est faite, on procède à une opération préliminaire de subdivision de la structure en huit sous ensembles, auxquels on attribue un signal binaire supplémentaire. Ce signal binaire vaut 1 lorsque tous les voxels du sous-ensemble sont réputés appartenir à la partie à visualiser de la structure. On lui attribue la valeur 0 dans le cas contraire. Par contre, s'il y a indétermination, on subdivise le sous-ensemble, lui-même, en huit sous-sous-ensembles. Ainsi de suite jusqu'à ce que tous les sous-ensembles ou sous-sous-ensembles hiérarchiquement organisés soient munis d'un signal binaire supplémentaire, 0 ou 1. Il est d'ailleurs possible que dans certains cas cette subdivision hiérarchique vienne à arriver jusqu'au niveau des voxels eux-mêmes.

Une fois que cette subdivision est faite on étudie quels sont les sous-ensembles ou sous-sous-ensembles qui sont visibles d'un point d'observation donné. L'avantage procuré par ce procédé de subdivision hiérarchique est qu'on connaît automatiquement les adresses des mots mémoires qui correspondent aux voxels situés à la surface. On a donc immédiatement affaire aux voxels visibles. On peut donc simplement représenter les voxels dans l'image, compte tenu de l'orientation de visualisation. On peut ainsi montrer, dans un exemple, que, pour une mémoire originale comportant 256 x 256 x 88 mots mémoires, on est capable d'extraire une image d'une vue d'une partie de la structure décrite dans cette mémoire en environ 0,5 seconde.

L'inconvénient du procédé ainsi présenté est cependant qu'elle nécessite pour le calcul des effets de visualisation, des machines spécialement programmées disposant par ailleurs une grande puissance de calcul. Utiliser des machines spécialement programmées revient à réaliser un matériel qui ne peut jamais être aussi bon marché que s'il était un matériel de type universel, à fonctionnement standard. Le développement de ce procédé est donc spécifique et coûteux.

En effet, dans ce procédé, comme dans d'autres connus par ailleurs (lancer de rayons, liste de surfaces), il est nécessaire, une fois qu'on a déterminé quel est le mot mémoire qui correspond à un voxel à représenter, de calculer les coordonnées d'un lieu dans un écran de visualisation, où une information lumineuse doit être affichée, qui correspondrait à la grandeur physique contenue dans le voxel. Ce calcul de coordonnées de lieux dans un écran revient à calculer l'intersection avec un plan (le plan de l'écran) d'un rayon passant d'une part par le voxel sélectionné et d'autre part orienté selon l'orientation de visualisation. L'orientation générale de visualisation est normalement perpendiculaire à l'écran. Ce calcul de type algébrique est en soi simple. Il nécessite de calculer les coefficients directeurs de trois droites représentatives de l'orientation de visualisation : celles qui sont associées aux axes du repère de l'objet dans le repère de l'écran. Ces coefficients interviennent alors dans ce calcul algébrique comme des coefficients multiplicateurs des coordonnées du voxel sélectionné ou, ce qui revient au même, dans la mémoire originale, de l'adresse du mot mémoire correspondant.

Autrement dit pour chaque voxel sélectionné à visualiser il y a trois multiplications à faire pour connaître l'abscisse dans l'écran, trois multiplications à faire pour connaître l'ordonné dans l'écran, et trois additions dans chacun de ces cas pour tenir compte d'un décalage à l'origine. Tous ces calculs, notamment les multiplications, sont bien trop longs à exécuter et conduisent à des pertes de temps qui s'opposent à la rapidité de la représentation de l'image. Ces pertes de temps ne peuvent être résolues qu'avec la réalisation de ces processeurs spécifiques dont on a indiqué par ailleurs les défauts de souplesse.

Il est connu par les articles suivants :

1. "A dynamic Screen Technique for Shaded Graphics Display of Slice-Represented Objects", R. Anthony Reynolds, Dan Gordon, Lih-Shyang Chen, Computer Vision, Graphics and Image Processing 38, 275-298 (1987), et

2. "Representation, Display and Manipulation of 3D Digital Scenes and their Medical Applications", Lih-Shyang Chen, Marc. R. Sontag, Computer Vision, Graphics and Image Processing 48, 190-216 (1989), des méthodes d'écran dynamique. Ces méthodes procèdent par projection de segments décrivant l'objet sur l'écran. Ces méthodes d'écran dynamique consistent à insérer au fur et à mesure chaque segment projeté sur l'écran dans l'ensemble des segments déjà projetés. Si l'insertion décèle de nouveaux pixels non cachés, ceux-ci sont peints en niveau de gris. Ces méthodes n'utilisent donc pas, comme on le verra plus loin dans l'invention, une mémoire intermédiaire de pointeurs orientant vers des voxels de l'objet. Dans l'invention, les parties cachées sont supprimées par une technique de z-buffer classique. Mais l'avantage de la mémoire intermédiaire est de pouvoir peindre les pixels sélectionnés par des techniques variées (en particulier en utilisant des normales précalculées). La méthode décrite dans les articles en question contraint d'utiliser une technique d'ombrage au vol, qui est de moins bonne qualité (cf article 1, page 281). Les auteurs ont utilisé pour implementer leur algorithme une description de type "run-length" similaire a celle dite en longueur de parcours de l'invention, pour des raisons de performance (article 1, page 285). Ils citent Merrill, Updata et Trivedi à ce propos (cf la liste de références de l'article 1).

L'article 2 reprend les mêmes aspects que le premier article en ce qui nous concerne, mais décrit l'objet par une méthode mélangeant l'usage d'un quadtree et d'une description "run-length". Les inconvénients de ces méthodes sont aussi une durée de calcul trop grande.

L'invention a pour objet de remédier à ces inconvénients, notamment en supprimant toutes les opérations de type multiplicatifs, en se servant, pour calculer une adresse dans l'écran d'une adresse préalablement calculée pour un autre point dans l'écran. On montrera alors que les opérations de multiplication nécessaires pour les phases de visualisation reviennent simplement à effectuer des additions, de valeur connues d'avance, ce qui est bien plus simple que d'effectuer les multiplications. Cette technique n'est alors envisageable qu'en explorant la mémoire originale selon un mode séquentiel propre d'exploration de cette mémoire originale. En pratique ce mode propre est un mode d'exploration de tous les points dans une ligne, de toutes les lignes d'une trame, et de toutes les trames de l'image les unes après les autres. Ce mode d'exploration propre, de type séquentiel, associé à l'inutilité d'effectuer les multiplications conduit déjà à un gain de temps appréciable. Selon l'invention, il est possible de se souvenir, avec un tel mode propre d'exploration, des coordonnées précédemment calculées des lieux dans l'écran qui correspondent à des voxels précédents étudiés. Il suffit alors, quand on passe à un voxel voisin, d'incrémenter ces coordonnées dans l'écran, en fonction de la direction d'observation.

Pour se souvenir des adresses préalablement calculées dans l'écran, on utilise de préférence une mémoire supplémentaire dite mémoire des pointeurs. Dans cette mémoire des pointeurs, dit encore pointeur, chaque mot dans le pointeur a une adresse qui correspond aux coordonnées d'un lieu dans l'écran, et a une information qui correspond à une adresse d'un mot mémoire original dans la mémoire originale.

Au moment où on cherche à faire la visualisation de l'image, il devient alors fort simple de lire, les uns après les autres, tous les mots dans le pointeur de façon que les adresses de ces mots se suivent conformément à la suite attendue des éléments d'image ou pixels dans l'écran. Autrement dit, au moment de la visualisation, on lit pixel par pixel dans chaque ligne, et toutes les lignes les unes à la suite des autres à la fois dans l'écran et à la fois dans la mémoire des pointeurs. La lecture de chaque nouveau mot dans le pointeur renseigne sur une adresse d'un mot mémoire original de la mémoire originale. On lit alors l'information contenue dans ce mot mémoire original. Cette information est utilisée comme grandeur de visualisation, par exemple en luminance ou en chrominance, pour afficher sur l'écran un point lumineux.

En outre, pour éviter d'avoir à traiter tous les voxels qui ne correspondent pas à la partie à visualiser de la structure, on transforme la représentation binaire de la structure issue de la segmentation en une représentation dite en longueur de parcours. Cette transformation a pour but d'accélérer les calculs des coordonnées de lieux dans l'écran puisqu'on ne calcule alors que celles qui correspondent à des projections de voxels appartenant à la partie à visualiser.

Toutes ces opérations n'ont pour but que de sélectionner, dans l'image à montrer, les voxels visibles (situés à la surface) de la partie à visualiser de la structure. Par une opération ultérieure d'ombrage, identique à celles connues, on ne traite ensuite que les points visibles correspondant à la direction d'observation. Les techniques d'ombrage peuvent être de type divers. Elles sont par exemple du type décrit dans "Image Quality in Voxel Based Surface Shading", A. Pommert, U. Tiede, G. Wiebecke, K.H. Hohne, Proceedings CAR '89, page 737, Springer-Verlag.

L'invention a donc pour objet un procédé de visualisation, sur un écran de visualisation, d'une partie de l'image d'une structure physique,

- cette structure étant décrite par une collection d'éléments de volume ou voxels, chaque voxel étant représentatif d'une part d'un lieu dans un espace à trois dimensions, et d'autre part d'au moins une valeur d'une grandeur physique représentative de la structure en ce lieu de l'espace,
- l'image de la structure étant décrite par une collection de mots mémoires dits originaux d'une mémoire dite originale en relation avec l'écran, chaque mot mémoire original de la mémoire originale étant associé, d'une part, à une adresse originale et, d'autre part, à une information originale contenue dans la mémoire originale à l'adresse originale de ce mot,
- les adresses des mots mémoires originaux correspondant aux lieux des voxels dans l'espace à trois dimensions, les informations originales contenues dans la mémoire originale correspondant aux valeurs de la grandeur physique, dans lequel:
- on scrute la mémoire originale en adressant les mots mémoires originaux selon un mode de scrutation propre à cette mémoire originale,
- on sélectionne les mots mémoires originaux dont l'information correspond à la partie à visualiser de la structure,
- on calcule pour les mots mémoires originaux sélectionnés des adresses de lieux dans l'écran de visualisation, et on attribue à ces lieu dans l'écran des valeurs d'au moins une grandeur de visualisation liées aux valeurs de la grandeur physique des mots mémoires concernés, et
- on montre sur l'écran l'image ainsi élaborée par la collection de ces lieux dans l'écran caractérisé en ce que,
- pour calculer les adresses des lieux dans l'écran on incrémente des adresses précédemment calculées de lieux dans cet écran, en ajoutant algébriquement à ces adresses des incréments dépendant d'une orientation de visualisation de la partie de la structure.

Selon une autre caractéristique de l'invention, pour montrer l'image élaborée, on utilise une mémoire intermédiaire dite des pointeurs tel que défini à la revendication 2.

L'invention sera mieux comprise à la lecture de la description qui suit et à l'examen des figures qui l'accompagnent, celles-ci ne sont données qu'à titre indicatif et nullement limitatif de l'invention. Les figures montrent :

- figure 1 : une représentation composite des moyens utilisés pour mettre en oeuvre le procédé de l'invention ;
- figure 2 : une représentation d'une ligne d'une trame de l'image à trois dimensions, ou d'une manière équivalente d'une ligne d'une page de la mémoire originale, en fonction de la grandeur physique stockée dans les mots mémoires originaux correspondant à cette ligne,

- figure 3 : une représentation simplifiée d'une page des mots mémoires originaux de la mémoire originale;
- figure 4 : une liste correspondant à une transformation du contenu de la mémoire originale, pour comprimer le traitement, et rendre celui ci plus accessible à une mémoire cache afin d'accélérer encore le procédé de l'invention ;
- figure 5 : un algorithme de traitement montrant les opérations effectuées sur les mots mémoires originaux pour les transformer en une liste selon la figure 4 ;
- figure 6 : un algorithme général d'élaboration de la mémoire des pointeurs selon l'invention, avec lequel on évite d'effectuer les multiplications.

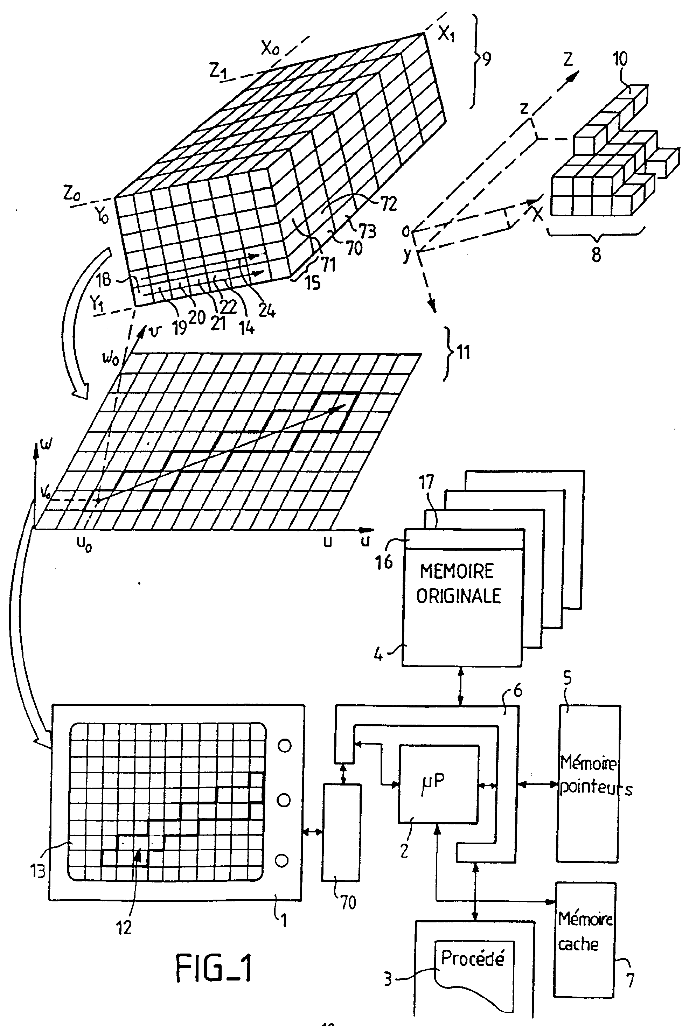

La figure 1 montre les moyens mis en oeuvre dans le procédé de l'invention. Ceux ci comportent essentiellement un dispositif de visualisation, ou écran 1, en relation avec un microprocesseur 2. Le microprocesseur 2 exécute le procédé selon l'invention, contenu dans un programme 3, en l'appliquant aux données relatives à la structure à montrer, qui sont contenues dans toutes les pages 17, ou trames, d'une mémoire originale 4. Lors du traitement, les données contenues dans la mémoire originale 4 sont transformées en des données contenues dans une mémoire de pointeurs 5. Tous ces circuits sont en relation les uns avec les autres par l'intermédiaire d'un bus de liaison 6 mixte, servant d'une part à transporter les adresses et d'autre part les données.

Ainsi qu'il l'a été évoqué précédemment, lorsqu'on utilise une version compressée, dite en longueur de parcours, des informations contenues dans la mémoire originale 4, ces informations compressées sont stockées dans une mémoire cache 7 reliées directement au microprocesseur 2. De telles architectures de systèmes informatiques sont connues, notamment en ce qui concerne les mémoires caches. Une explication en est donné par exemple par "Fonctionnement des mémoires caches : l'exemple du NS32532", Jean-Claude Mathon, Maurice Valentaten, Minis et Micros n° 280, 18 mai 1987. En ce qui concerne la liaison du microprocesseur 2 avec l'écran 1, il est normalement fait usage d'une mémoire d'image 70 associée naturellement à ses circuits de gestions propres.

Une partie 8 d'une structure 9 est à montrer. La partie 8 et la structure 9 est constituée par une collection de voxels 10 dont les coordonnées x, y, z, sont repérées par rapport à un système d'axe O X Y Z. Dans ce système d'axes de référence, la structure est telle que ses coordonnées sont respectivement entièrement comprises entre $X_0$ et $X_1$ $Y_0$ et $Y_1$, et $Z_0$ et $Z_1$. L'opération de visualisation nécessite la projection de tous les voxels de la structure sur un plan 11 repéré, dans l'invention, par un système d'axe U V. Ce plan est perpendiculaire à un axe W. L'axe W correspond à la direction de projection et, en d'autres termes, à l'orientation de visualisation. La projection de la structure 9 sur le plan 11 revient à calculer, pour chacun des voxels de coordonnées x y z de cette structure, des coordonnées u v dans le plan 11. On attribue par ailleurs, à chaque voxel projeté sur le plan 11, une troisième coordonnée w correspondant à la distance qui sépare ce plan 11 de ce voxel de coordonné x y z. Dans la représentation qui est donnée ici, on préfère expliquer des projections géométriques. Mais il est entendu que toutes ces opérations de projections géométriques ont des répercussions sur des traitements effectués sur des adresses de mots mémoires originaux. Ces traitements sur ces adresses sont assimilables à ces opérations de projection.

Compte tenu de l'orientation géométrique et de la position dans l'espace de la structure 9 par rapport au plan 11 cette projection est équivalente à une opération de rotation translation dont l'expression analytique est du type :

## Premier tableau

$$\begin{vmatrix} u \\ v \\ w \end{vmatrix} = \begin{vmatrix} ux & uy & uz \\ vx & vy & vz \\ wx & wy & wz \end{vmatrix} \begin{vmatrix} x \\ y \\ z \end{vmatrix} + \begin{vmatrix} u_0 \\ v_0 \\ w_0 \end{vmatrix}$$

Avec cette écriture matricielle on calcule, une fois pour toute, les coefficient directeurs ux uy uz vx vy vz wx wy et wz. Les coordonnées dans l'écran $u_0$ et $v_0$ sont les coordonnées de la projection du voxel dont les coordonnées x,y,z, dans la structure 9 valent 0, 0, 0. Les coordonnées de ce point correspondent par ailleurs, dans la mémoire originale 4, au premier mot mémoire original de la première ligne de la première page de cette mémoire originale. Tout déplacement en translation ou en rotation de la structure 9 par rapport au repère u v w revient à modifier les coordonnées $u_0$ et $v_0$. De même tout déplacement de l'image 12 dans l'écran 13 du dispositif de visualisation 1 (par exemple au moyen d'une boule ou d'une souris) revient également à changer les valeurs $u_0$ et $v_0$. La valeur $w_0$ mesure la distance, à une constante près, qui sépare le premier voxel de la structure 9 du plan 11.

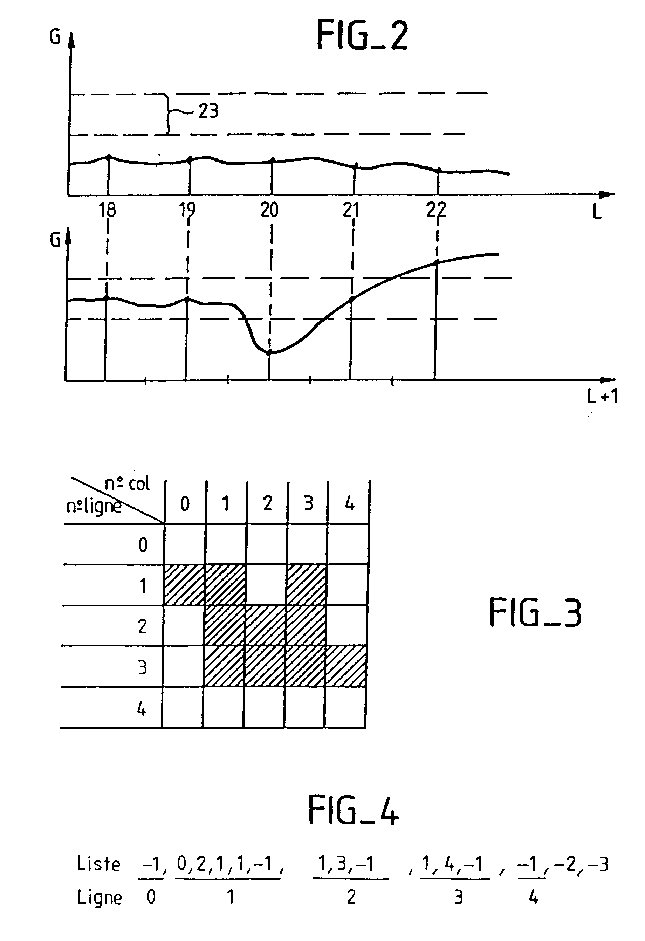

La figure 2 montre l'évolution d'une grandeur physique G mesurée, ou plutôt échantillonnée, en certains point d'une ligne L qui passe à travers la structure 9. Par exemple la ligne L correspond à la première ligne 14 de voxels de la première trame 15 de la structure 9, elle même identique à la première ligne 16 de mots mémoires de la première page mémoire 17 de la mémoire originale 4. Cette grandeur physique G a été échantillonnée à l'endroit de cinq voxels numérotés respectivement 18 à 22. On constate que pour cette ligne L la grandeur physique a une valeur extérieure à une fenêtre 23. En conséquence on admettra par la suite qu'aucun des cinq voxels de cette ligne L n'appartient à la partie 8 à visualiser de la structure 9. Pour une ligne suivante L+1, qui correspondrait par exemple à la ligne 24 adjacente à la ligne 14 dans la structure 9 (et à une ligne "adjacente" correspondante dans la mémoire originale 4), on constate que dans l'alignement des voxels 18 19 et 21 la grandeur échantillonnée appartient à la fenêtre 23. L'opération de segmentation revient, en traitement binaire, à attribuer à ces voxels dans l'alignement des valeurs binaires supplémentaires 1 tandis que les autres se voient attribuer la valeur 0. Ce traitement est classique, la fenêtre de valeur 23 pouvant être remplacée par une constatation que la grandeur physique à l'endroit voxel concerné est supérieure ou respectivement inférieure à un seuil. La segmentation peut par ailleurs concerner un traitement portant sur une combinaison de plusieurs grandeurs physiques.

Une fois que toute la structure 9 a été segmentée, une fois que tous les mots mémoires originaux de la mémoire originale 4 ont été affectés d'une valeur binaire, supplémentaire 1 ou 0, chaque page de la mémoire se présente, en ce qui concerne cette valeur binaire, conformément à la figure 3. Cette figure montre qu'à des adresses lignes et des adresses colonnes dans une page mémoire chacun des mots mémoires concernés est doté d'une information 0 quand le carré à l'intersection est blanc et est doté d'une information 1 quand le carré à l'intersection est grisé. On a ainsi représenté 5 lignes et 5 colonnes. Dans la pratique la structure peut être représentée dans la mémoire par des pages de 256 x 256 mots mémoires ou même plus.

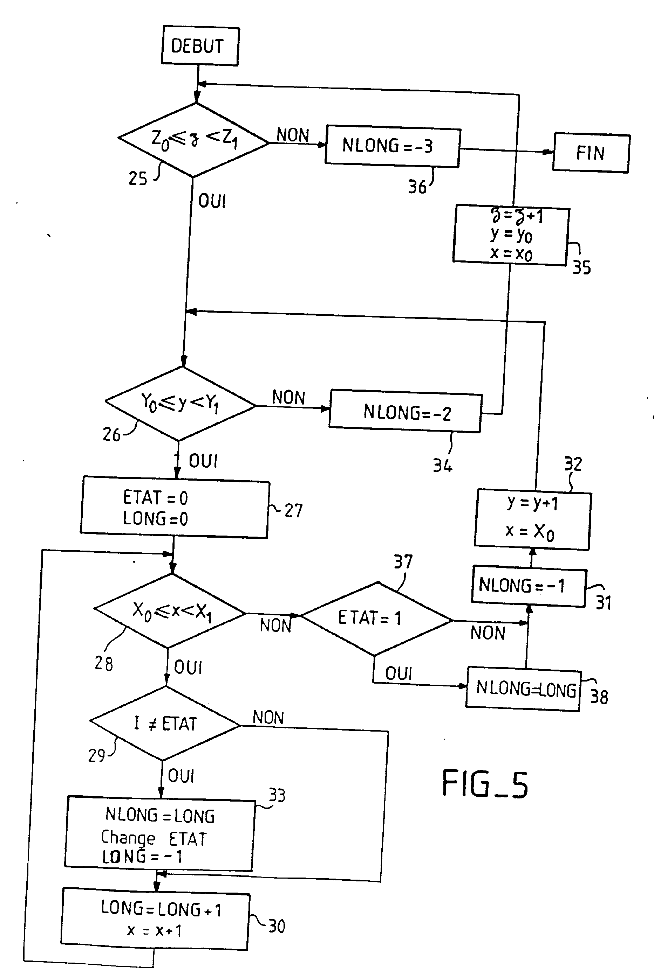

La première opération de compression, non a priori indispensable dans l'invention, consiste à remplacer la mémoire originale 4, représentée dans la figure 3, par une liste représentée figure 4 facilement stockable dans la mémoire cache 7 du dispositif de traitement d'information utilisé dans l'invention. En effet, la liste de la figure 4 ne comporte que 15 termes renseignant à la fois sur l'état binaire et sur l'adresse des 25 termes de la figure 3, alors que celle-ci comportait déjà 25 termes rien que pour renseigner sur l'état binaire des mots mémoires originaux. En dessous de la liste de la figure 4 est indiquée une ligne. Cette indication ne fait pas partie de la liste. Elle n'est donnée ici que pour permettre de comprendre comment est structurée la liste, selon un procédé dit de compression en longueur de parcours dont l'algorithme est représenté par ailleurs sur la figure 5. Cet algorithme est mis en oeuvre par le micro-processeur 2. La liste est stockée dans la mémoire cache 7.

Avant de décrire cet algorithme, on va imposer certains codages. Il est évident que ces codages pourraient être imposés différemment sans que cela nuise à la généralité de l'invention. Ces codages ne sont donnés ici que pour faciliter la compréhension et, en particulier dans un mode préféré, parce que par ailleurs ils accélèrent le traitement. Le codage dit en longueur de parcours revient à remplacer les éléments binaires d'une suite par une valeur représentative du nombre de ces éléments binaires d'un même genre qui se suivent dans cette suite. Par exemple, sur la ligne 0 de la figure 3 on constate qu'il y a cinq éléments binaires du même genre : ils sont tous chargés de la valeur 0. Sur la ligne 1, il y a d'abord deux éléments binaires à 1 puis un élément binaire à 0 puis un élément binaire à 1 et enfin un élément binaire à 0. Sur la ligne 2 il y a un élément binaire à 0, suivi de trois éléments binaires à 1 et de un élément binaire à 0. Sur la ligne 3 il y a un élément binaire à 0 suivi de 4 éléments binaires à 1. Sur la ligne 4 il y a 5 éléments binaires à 0. En fonction du codage de compression on va remplacer ces suites d'élément binaires par des suites de nombres. On devrait par exemple en prenant les lignes les unes après les autres écrire : 5, 2, 1, 1, 1, 1, 3, 1, 1, 4, 5. Dans ce cas, chaque changement de genre est matérialisé par un autre nombre.

Pour tenir compte cependant d'une part des changements de ligne au bout d'une ligne (au bout de 5 éléments binaires dans l'exemple, ou au bout de 256 ou 512 éléments binaires en pratique), d'autre part de la fin de l'exploration d'une trame ou d'une page de mémoire complète, ainsi que pour tenir compte de la fin de l'exploration de la mémoire originale entière, on repère ces fins de ligne, fins de trame, et fins de mémoire par des codages particuliers. De préférence dans un exemple on prendra ces codages particuliers de telle façon qu'ils soient négatifs. Ces codages pourraient cependant être complètement différents, et avoir des valeurs par exemple impossibles à atteindre autrement : par exemple 1024, 1025, et 1026 dans le cas ou il n'y a 512 mots mémoires dans une ligne de mots mémoires de la mémoire originale 4.

On prend de plus comme contrainte, pour ne pas avoir à indiquer le genre, état 1 ou état 0, du premier voxel trouvé dans la ligne que ce premier voxel sera toujours un voxel à l'état vide : c'est à dire qu'il est réputé ne pas appartenir à la partie à visualiser de la structure. Comme il n'y a pas de raison pour que ceci soit toujours vrai, et au cas ou le premier voxel appartiendrait effectivement à la partie à visualiser de la structure, on attribue comme longueur de parcours la valeur 0 dans ce cas. Si on trouve dans une ligne un premier voxel seul à l'état 0, la liste correspondant à cette ligne commencera par 1. Si on en trouve 2 elle commencera par 2 et ainsi de suite. Par contre si le premier voxel de la ligne appartient à la structure la liste correspondant à cette ligne commencera par 0.

Enfin, dans le but de simplifier les calculs, et en particulier de ne pas effectuer de calcul de coordonnées pour des points de la structure 9 qui n'appartiennent pas à la partie 8, on décide si le dernier segment sur une ligne est vide (état 0) de ne pas le représenter. Dans ce cas, le dernier segment n'est pas représenté mais à la place, dans la liste, on fait apparaître immédiatement le code de fin de ligne.

On va faire l'élaboration de la liste de la figure 4 en examinant d'une part la structure de la figure 3 et d'autre part l'algorithme de la figure 5. Le début du traitement consiste pour x, y, z, partant $X_0$, $Y_0$, $Z_0$ jusqu'à $X_1$, $Y_1$, $Z_1$, à vérifier d'abord avec le test 25 si z appartient $Z_0$-$Z_1$. Lorsque c'est le cas on vérifie par ailleurs par le test 26 que y appartient $Y_0$-$Y_1$, Ceci étant acquis, on crée alors avec une instruction 27 deux variables : une variable dite ETAT et une autre variable dite LONG, toute deux mises initialement à 0. Dans un test 28, on vérifie que x est compris entre $X_0$ et $X_1$. Au début, lorsque x vaut $X_0$ ceci est effectivement le cas. Dans ces conditions on teste, avec un test 29, l'état binaire I du voxel (au début il s'agit du premier voxel 18) pour savoir si cet état binaire I est différent de la valeur ETAT. En ce qui concerne le premier voxel 18 son ETAT n'est pas différent de l'ETAT 0 puisque justement, comme on l'a vu figure 3, il y a une valeur binaire 0 stockée à cet endroit. Dans ces conditions on incrémente, avec une instruction 30, la valeur LONG pour qu'elle prenne une valeur augmentée d'une unité. On augmente aussi l'abscisse x du voxel étudié (18) pour aller étudier le voxel voisin : le voxel 19. Pour ce voxel voisin on réitère le test 28, et, le cas échéant le test 29. En ce qui concerne la première ligne on effectue ces tests et on exécute l'instruction 30 pour chacun des voxels 18 à 22. Après l'exécution du test 29 concernant le voxel 22 l'abscisse x devient supérieure à $X_1$. Dans ces conditions à la sortie du test 28 on impose par une instruction 31 à une variable représentant une nouvelle longueur, dite NLONG, de prendre la valeur - 1. Et on indique cette nouvelle valeur dans la liste. Voir figure 4, la liste commence par une première valeur - 1. Cette première valeur correspond effectivement à la ligne 0. Une fois qu'on a ainsi terminé une ligne (donc par un codage -1), on passe à la ligne suivante. Avec une instruction 32 on impose à y de correspondre à la ligne suivante : y = y + 1. Par ailleurs, on se remet au début de la ligne en imposant à x de reprendre la valeur $X_0$.

Avec une deuxième série de passages dans le test 28, on passe à l'examen de la ligne 1 de la figure 3. Après exécution de l'instruction 27 et du test 28, le test 29 indique que la grandeur binaire stockée I est différente de l'état 0 imposé par l'instruction 27. En effet, au début de la ligne 1, figure 3, le premier voxel est à l'état 1. Dans ce cas on impose à la variable NLONG de prendre avec une instruction 33 la valeur LONG. Elle prend donc ici la valeur 0. Au cours de cette instruction 33 on change également l'état de la variable ETAT et on met LONG à -1. Comme avec l'instruction 33 on introduit une nouvelle valeur NLONG = 0 on écrit 0 à la suite dans la liste de la figure 4. Par ailleurs, on exécute normalement l'instruction 30.

Puis on passe au test du voxel situé à droite du premier voxel de la ligne 1. Ce test 29, du fait que la variable ETAT a été changée de valeur, est négatif. Et l'application directe de l'instruction 30 revient à mettre maintenant la valeur 2 dans la variable LONG. Pour le voxel qui se trouve à l'aplomb de la deuxième colonne de la première ligne la réponse au test 29 est alors oui. En effet l'état de ce voxel est 0 alors qu'il y a la valeur 1 dans la variable ETAT. Dans ce cas, on crée une nouvelle valeur NLONG égale à la valeur LONG, c'est à dire à 2. On inscrit cette nouvelle valeur à la suite dans la liste. Et on rechange la valeur ETAT. Les tests 28, 29 et les instructions 30 et 33 se déroulent ainsi jusqu'à ce que l'on produisent après un test 37 et avec l'instruction 31 une nouvelle valeur -1 marquant la fin de la ligne 1.

Un test 37 évalue, en aval du test 28, la valeur de la variable ETAT. Si ETAT est nul, et si donc on se trouve ainsi à la fin d'un segment vide, qui ne doit pas être stocké, on effectue directement l'instruction 31. Par contre, si ETAT n'est pas nul, on est dans un segment plein et il faut, en une instruction 38, effectuer la première partie de l'instruction 33 : NLONG = LONG, c'est-à-dire ajouter une nouvelle valeur à la liste.

En ce qui concerne la ligne 2, qui commence par un voxel vide, elle est naturellement constituée, dans la liste de la figure 4, par une valeur 1 suivie d'une valeur 3. Le dernier voxel de la ligne 2 qui est vide est tout simplement représenté, selon ce qui a été dit précédemment, directement par le codage de fin de ligne -1. On agit de même pour la ligne 3. Dans ce cas, le test 37 positif impose la valeur 4 par l'instruction 38 On constate cependant une différence entre la ligne 2 et la ligne 3 en ce sens que, dans la ligne 2 il y a 1 et 3 soit 4 voxels à comptabiliser alors qu'il n'y en a 1 et 4 soit 5 pour la ligne 3. Avec la contrainte de compactage qu'on a ainsi imposé, on obtient des lignes qui ne sont pas de longueurs identiques. La ligne 4 est représentée directement par une valeur de fin de ligne -1, comme la ligne 0.

A la fin de l'exploration de la ligne 4, lorsqu'on a produit la valeur NLONG = -1 correspondant à cette ligne, l'instruction 32 a permis à la valeur d'ordonnée courante y de prendre une valeur supérieure à $Y_1$. Par conséquent, on produit à l'issue du test 26 à ce moment, par une instruction 34 une nouvelle variable NLONG = -2. La valeur - 2 est affectée à la signification de fin de trame, ou de fin de page mémoire. Dans ce cas on exécute une instruction 35 au cours de laquelle on incrémente la hauteur courante z de telle façon que z soit égal maintenant à z + 1, et on remet au départ x, y pour leur redonner les valeurs $X_0$ et $Y_0$ respectivement. On réexécute

alors le test 25, et la suite de tous les autres tests jusqu'à ce que le test 25, lui-même connaisse une issue négative. Dans ce cas on produit par une instruction 36 une dernière valeur de longueur NLONG = -3 qui marque la fin du traitement de tous les mots mémoires de la mémoire originale 4.

Tout ce traitement n'a servi qu'à remplacer la succession des mots mémoires de la mémoire originale 4 par une liste, bien plus courte, stockée dans la mémoire cache 7 en relation directe avec le microprocesseur 2. Bien que cette manière de faire soit une manière préférée de l'invention, et bien que la suite de la description de celle ci soit faite en référence à cette manière de faire, il est évident qu'au premier niveau de l'invention cette étape n'est pas indispensable.

Le procédé de l'invention consiste essentiellement, pour pouvoir se servir des coordonnées précédemment calculées dans le plan 11 des lieux de projections des voxels à construire une mémoire dite des pointeurs 5. Cette mémoire des pointeurs permet en outre d'aller rechercher par la suite plus rapidement les grandeurs physiques à visualiser. La mémoire des pointeurs 5 est donc une mémoire dans laquelle des mots mémoires P sont repérés par des adresses u, v. Pour la commodité de l'explication, on prendra ces adresses égales aux coordonnées des lieux des pixels dans le plan 11 et dans l'écran 1. En effet, d'une manière équivalente, ces coordonnées correspondent aux adresses de la mémoire d'image 70 en relation avec le dispositif de visualisation 1. L'information qui doit être stockée dans chacun des mots mémoires de la mémoire des pointeurs 5 est une information double. D'une part, dans une première zone elle renseigne sur les coordonnées x y z des voxels concernés dans la partie 8 de la structure 9, ou d'une manière équivalente sur les adresses correspondantes dans la mémoire originale 4. D'autre part dans une autre zone, on stocke une grandeur w représentative de l'écart résultant de la projection entre un voxel concerné et le plan 11. La grandeur w est pour une direction d'observations donnée, le plus petit écart rencontré, la plus petite distance au plan de l'écran. Il concerne le premier voxel visible situé à la surface de la partie 8 dans cette direction d'observations.

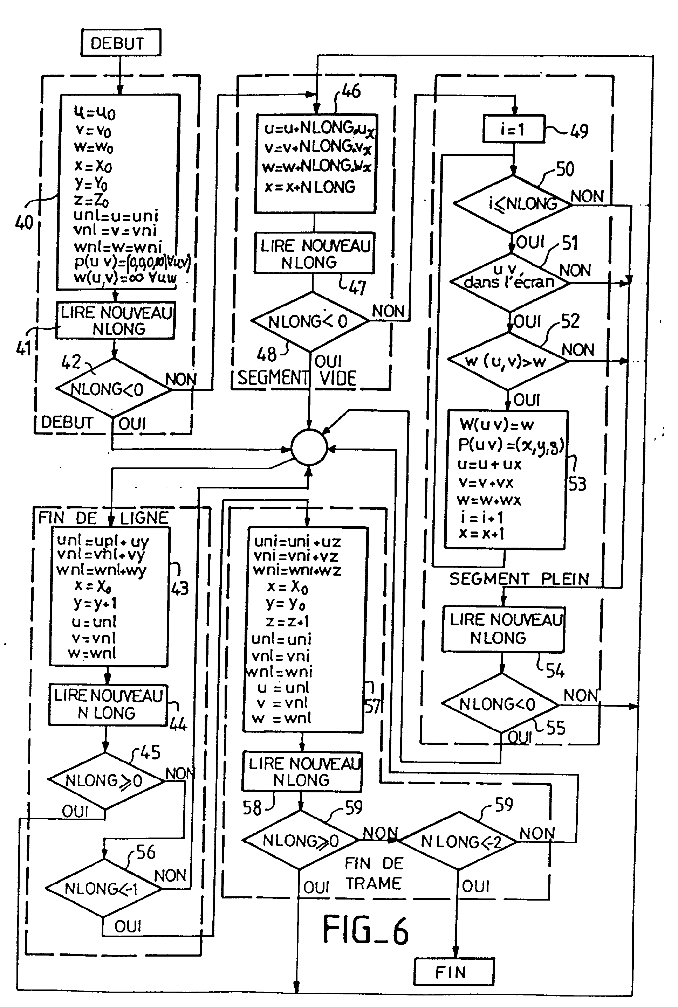

Le traitement selon l'invention comporte 5 étapes différentes intitulées respectivement sur la figure 6 : DEBUT, SEGMENT VIDE, SEGMENT PLEIN, FIN DE LIGNE, et FIN DE TRAME. Ce traitement utilise d'une part les coordonnées courantes dans l'écran u v et l'écart w. Il utilise d'autre part des coordonnées unl, vnl, wnl correspondant à un premier point d'une ligne courante dans l'espace de l'écran. Enfin il utilise des coordonnées uni, vni, wni correspondant au premier point de la première ligne de la trame courante. Le procédé utilise encore la variable NLONG vue précédemment et correspondant aux valeurs successives de la liste de la figure 4.

Le début du traitement selon l'invention commence par l'exécution d'une instruction 40 avec laquelle u, unl et uni, prennent la valeur $u_0$ de même v, vnl, et vni prennent la valeur $v_0$ et w, wnl, et wni prennent la valeur $w_0$. Ceci signifie qu'on considère comme premier point de la première ligne de la première image courante dans l'écran le point de $u_0$ et $v_0$ et qu'on lui affecte comme écart la valeur $w_0$. Les valeurs $u_0$ et $v_0$ peuvent être fixées par un opérateur en fonction d'un cadrage souhaité de l'image dans l'écran. Ces valeurs peuvent être imposée par un clavier de commande ou par tout autre dispositif de même effet. La valeur $w_0$ peut être fixée à volonté, en fonction d'un effet d'éloignement que l'opérateur veut imposer à l'image à visualiser. Par ailleurs, on impose une manière cohérente à x, y, z, de prendre les valeurs $X_0$, $Y_0$, $Z_0$.

En agissant ainsi on a commencé par imposer la contrainte suivante :
- On va explorer ou simuler l'exploration de la mémoire d'image originale avec un mode d'exploration propre à cette mémoire (confer l'élaboration de la mémoire 5), et d'autre part on va décrire les pixels du plan 11 selon un mode d'adressage induit par la translation et la rotation qu'on a fait subir à la structure 9 pour la projeter sur ce plan 11. On dit qu'on va simuler la lecture de la mémoire originale 4 parce qu'en fait on va lire la liste de la figure 4 dans la mémoire cache 7. En pratique lire la liste dans la mémoire cache 7 revient cependant à scruter la mémoire originale 4 selon son mode de lecture propre.

Pour commencer le traitement, on convient en outre, d'une part, de mettre en chaque pixel P de coordonnées u v dans le plan 11 une adresse correspondant à celle du premier voxel scruté 18. Dans la pratique, on peut s'arranger pour que l'information sacrifiée correspondant à ce voxel représente un niveau de luminosité très clair (ou très sombre) pour avoir au départ un écran uniformément blanc (ou noir). On peut aussi initialiser l'écran d'une autre façon. On peut par exemple remplir le plan 11, au lancement de l'algorithme, avec une adresse hors champ qui ne sera pas relue, alors que l'écran est initialement remis à zéro. D'autre part, en ce qui concerne l'écart w on lui donne une valeur infinie. Dans la pratique on lui donne une valeur très grande, par exemple la valeur 1024.

Puis on lit au cours d'une instruction 41 la première valeur de la variable NLONG. Dans la liste de la figure 4 cette première valeur vaut -1. Dans un test 42 qui suit l'instruction 41, on teste si cette valeur est négative. En l'occurrence elle l'est puisqu'elle vaut -1. En conséquence on exécute la macro-commande FIN DE LIGNE. Ceci est cohérent puisque -1 correspond justement à une fin de ligne. Dans une FIN DE LIGNE, au cours d'une instruction 43, on remplace x par $X_0$ et y par y + 1. Ceci signifie qu'on va scruter une autre ligne dans la mémoire originale 4 puisque la ligne scrutée précédente était complètement vide. On impose à x de reprendre la valeur $X_0$ : ceci signifie qu'on se met au début de cette ligne. En contrepartie, on modifie les valeurs courantes unl, vnl, wnl et u ,v w. On notera que, restant à ce stade dans la même image, on ne modifie pas les valeurs courantes uni, vni, wni. Pour modifier la valeur unl, il suffit de prendre la valeur unl précédente et de lui rajouter la quantité uy. En effet, on peut considérer qu'on est passé ainsi du premier point de la première ligne de la mémoire originale 4 au premier point de la deuxième ligne de cette mémoire. En conséquence x et z n'ont pas changé, seul y est devenu égal à y +1. En application de l'expression donnée par le premier tableau vu précédemment, on se rend compte que le calcul matriciel revient à ajouter à unl la quantité uy. De même pour vnl, il faut ajouter vy, et pour wnl il faut rajouter wy. Ceci est algébriquement exprimé par le deuxième tableau ci-dessous.

## Deuxième tableau

$$u = ux.x + uy.y + uz.z + u_0$$
$$v = vx.x + vy.y + vz.z + v_0$$
$$w = wx.x + wy.y + wz.z + w_0$$

Pour l'instant on va admettre que les valeurs ux uy uz vx vy vz wx wy et wz sont des valeurs entières et qu'il n'y a pas de problème particulier à définir de la même façon une adresse nouvelle dans la mémoire des pointeurs 5 et des coordonnées nouvelles dans le plan 11. Autrement dit, étant donné que ces valeurs ont été calculées une fois pour toute, on a juste à exécuter ici des additions. L'instruction 43 étant exécutée, on lit alors, instruction 44, une nouvelle valeur NLONG dans la liste. En l'occurrence ici on va lire la valeur qui est la deuxième valeur de la liste de la figure 4. Au cours d'un test ultérieur 45 on compare cette nouvelle valeur NLONG à 0. Etant donné qu'on a considéré qu'elle était plus grande ou égale à 0 (puisqu'elle vaut 0 justement) on va aller exécuter la macro-commande SEGMENT VIDE.

Il est normal qu'on aille exécuter la macro-commande SEGMENT VIDE puisqu'on a dit que toute ligne, dans la mesure où son traitement n'était pas complètement supprimé, devait commencer par un segment vide. On note ici que si on avait fait l'hypothèse inverse on serait aller exécuter la macro-commande SEGMENT PLEIN. Ou bien, si on n'avait pas fait d'hypothèse du tout, il faudrait à ce niveau un test supplémentaire pour savoir quelle macro-commande SEGMENT VIDE ou SEGMENT PLEIN il convient d'exécuter. Dans le cas présent, étant donné qu'on est au début d'un segment, on dit, instruction 46, que pour un même y et un même z, x devient égal à x + NLONG, et que d'une manière correspondante u devient égal à u + NLONG. ux, et ainsi de suite. Ceci signifie qu'on ne va pas traiter en pratique la partie vide du segment, mais qu'on va aller voir au contraire directement le segment plein suivant.

On remarque que l'on a affaire ici à des multiplications du type NLONG ux. En fait NLONG peut prendre un nombre limité de valeurs. Par exemple NLONG sera toujours inférieur à 512 quand l'image est résolue sur 512 points par ligne. Comme ux, ou vx, ou wx eux mêmes ne peuvent prendre, compte tenu des différentes orientations possibles qu'un nombre limité de valeur, par exemple de 0 à 10 il suffit d'une mémoire de capacité de 5 K mots (K = 1024) elle aussi chargée dans la mémoire cache, pour pouvoir exécuter sous forme d'adressage le calcul des nouvelles valeurs courantes u,v et w. On notera cependant, comme indiqué au début de la description, qu'on utilise la valeur courante u, v, et w déjà connues préalablement pour définir la nouvelle ligne.

Après avoir exécuté l'instruction 46 on exécute l'instruction 47 du même type que l'instruction 44 qui revient à lire la valeur suivante de NLONG. Dans le cas présent concernant la ligne n° 1, on va lire la valeur 2. On compare alors cette valeur à 0. Normalement, compte tenu de ce qu'on vient d'explorer un segment vide on doit maintenant être dans un segment plein et donc la valeur est plus grande que 0. Dans ces conditions on va exécuter la macro-commande SEGMENT PLEIN.

Dans celle ci on commence par imposer avec une étape 49 à une variable cyclique i de prendre la valeur 1. Puis on teste si i est inférieur à la valeur NLONG extraite dans un test 50. Dans le cas présent, 1 étant inférieur à 2, au cours d'un test suivant 51 on regarde si u et v calculés correspondent à un point dans l'écran. En effet, si du fait de l'orientation et de la projection u et v courant apparaissaient comme des points extérieurs à l'écran 1 il faudrait arrêter le traitement relatif à ce segment plein. Il ne sert en effet à rien de chercher à visualiser des points hors de l'écran. Supposons pour l'instant qu'on soit encore dans l'écran, on teste alors dans un test 52 la valeur de l'écart W(u, v). Normalement cette valeur d'écart à été fixée à une valeur très grande. On avait dit précédemment qu'on mettait l'infini ou par exemple 1024. On regarde si cette valeur très grande, affecté à ce point de coordonnée u, v dans l'écran, est plus grande que la valeur w résultant selon le tableau 2 de la projection du voxel x, y, z concerné en u, v. Si la valeur w est plus petite que W ceci signifie que le voxel testé x, y, z, est plus proche du plan 11. Dans ces conditions on le choisit. Ceci signifie que pour les coordonnées u et v en question on retient, instruction 53, maintenant une valeur W (u, v ) = w.

Puis on affecte dans la mémoire des pointeurs au mot P d'adresse u, v l'adresse x, y, z comme information stockée. Autrement dit on va stocker comme information dans la mémoire des pointeurs une adresse de la mémoire originale 4. Ceci étant fait on se déplace d'une part sur la ligne courante dans le plan 11 en effectuant les opérations u = u+ux, v =v+vx w=w+wx. Ceci signifie qu'on va regarder ce qui se passe dans la ligne courante dans l'écran (en respectant l'orientation de projection) à propos de la projection de la suite de la partie 8 de la structure 9. D'autre part, dans cette partie 8 on va donc explorer le point suivant, en effectuant x = x+1. Par ailleurs, afin de rester dans le même segment on fait varier la variable cyclique i = i+1. Et on retourne au test 50.

Dans le cas présent étant donné que dans la liste NLONG valait 2, on effectue à nouveau les trois tests 50 à 52, et pour le point suivant à tester dans l'écran le test 50 fait sortir de la macro-commande SEGMENT PLEIN. En effet en ce cas on aboutit à i=3 qui est effectivement supérieur à 2 donc il n'est pas inférieur ou égal à 2. Avant de sortir de la macro-commande SEGMENT PLEIN on exécute l'instruction 54 qui consiste à lire la longueur du nouveau segment, dans le cas présent on va lire une valeur NLONG égale à 1. Etant donné que NLONG dans ce cas n'est pas inférieur à zéro (ceci signifie que l'on est pas arrivé en bout de ligne) on va alors exécuter la macro-commande SEGMENT VIDE à cause du passage dans le test 55. Ainsi de suite, les macro-commandes SEGMENT PLEIN et SEGMENT VIDE se suivent. Dans la macro-commande SEGMENT PLEIN, on impose pour chaque valeur courante dans l'écran de prendre la valeur correspondante d'adresse dans la mémoire originale 4. Par contre, pour la macro-commande SEGMENT VIDE, on ne fait rien du tout, si ce n'est de rejoindre le plus vite possible la macro-commande SEGMENT PLEIN pour l'étude du segment plein suivant.

Il arrive à un moment que le test 55, ou le cas échéant le test 48, oriente sur la macro-commande de FIN DE LIGNE. Dans ce cas on passe à la ligne suivante et tout recommence entre SEGMENT VIDE et SEGMENT PLEIN comme précédemment. Cependant, en particulier lorsqu'on arrive à la fin d'une trame, et que donc la valeur rencontrée NLONG vaut -2, le test 45 appliqué à cette valeur oriente vers un test suivant 56, au cours duquel on regarde si NLONG est inférieur à -1.

On comprendra aisément que le fait d'avoir choisi des valeurs négatives pour les codages permet de simplifier grandement les tests : il suffit de tester uniquement le signe, dans certains cas, de la nouvelle valeur NLONG testée pour savoir ce qu'il faut exécuter comme instruction ou comme macro-commande suivante.

Dans le cas où on a abouti à la FIN DE TRAME, on va exécuter la macro-commande fin de trame. Dans celle-ci, d'une part, on augmente z de la valeur 1 et, d'autre part, on remet x et y au départ, c'est à dire x devient égal à nouveau à $X_0$ et y devient égal à nouveau à $Y_0$. Par ailleurs, on utilise les précédentes valeurs uni, vni et wni correspondant au début de la trame précédente pour leur ajouter respectivement les valeurs uz, vz,wz, de manière à produire les nouvelles valeurs uni, vni, wni valables pour la nouvelle trame courante. Dans cette nouvelle trame, on définit le premier mot de la première ligne courante ainsi que le premier mot courant comme étant le premier voxel de la première ligne de la nouvelle trame courante. En pratique, cela revient à faire u=unl=uni, v=vnl=vni, w=wnl=wni. A la fin de l'instruction 57 qui permet d'exécuter ce décalage, on lit le nouveau NLONG, celui qui correspond au premier NLONG de la trame suivante. Selon la valeur de ce NLONG, on ira soit exécuter la macro-commande SEGMENT VIDE (puisqu'on doit toujours commencer par un segment VIDE, même de longueur nulle), ou bien la macro-commande FIN DE LIGNE, si la ligne à prendre en compte ne comporte aucun voxel appartenant à la partie 8 à visualiser de la structure 9. Lorsque tout le traitement est fini, un test 59 permet de remarquer qu'après une fin de trame la valeur NLONG est plus petite que -2, et dans ce cas elle conduit à la fin du traitement.

Du point de vue du temps de calcul, la partie critique de l'algorithme de l'invention se situe dans la macro-commande SEGMENT PLEIN. L'avantage du présent algorithme est déjà de ne nécessiter aucun accès à la base de données constituée par la mémoire originale 4, en dehors de la lecture de la valeur NLONG. Celle-ci étant comprimé est par ailleurs stockée dans la mémoire cache. La quantité de mémoire rapide nécessaire dans la mémoire cache est donc très limitée. La partie centrale de la boucle se prête par ailleurs bien à une réalisation sur un circuit spécialisé, ce qui signifie qu'on peut, pour l'exécution de la macro-commande SEGMENT PLEIN seule, réaliser un circuit sous forme de carte électronique spéciale. Ce circuit exécuterait les fonctions 49 à 53.

Il reste maintenant à régler la question d'une part des quantités ux, uy, uz, vx, vy, vz, wx, wy, wz qui ne seraient pas entières, et d'autre part un problème du sous-échantillonnage. En ce qui concerne les parties non-entières, elles sont tout simplement ignorées. Ceci signifie qu'il y a une troncature par enlèvement des bits de poids faibles sur le calcul des nouvelles adresses u, v, w. Il est donc possible de cette manière que, plusieurs fois de suite, soient enregistrées dans la mémoire des pointeurs, à une même adresse u v, à titre d'information, des adresses de mots-mémoires originaux différents xyz, de la mémoire originale 4. Les nouvelles valeurs prennent alors la place des anciennes. En ce qui concerne le test 51, le fait de vérifier que u et v sont dans l'écran revient à tester si les valeurs précédentes u et v sont inférieures respectivement à U V qui marquent les limites de l'écran.

On a dit précédemment que la structure 9 étudiée pouvait être une structure décrite par une collection de 256 x 256 x 88 voxels. Donc cette structure ne présente pas une même résolution selon le troisième axe où, pour simplifier, le nombre de coupes acquises dans le corps a été moins important. Il est imaginable que les rotations imposées à la structure 9 reviennent à présenter la longueur, selon laquelle on n'a que 88 coupes, en face d'une dimension nominale de l'écran de 256 pixels. Dans ce cas, on aurait affaire à un sous-échantillonnage de la mémoire des pointeurs. En effet, dans ce cas, certains mots mémoires de la mémoire des pointeurs 5 seraient chargés par une adresse, mais seraient entourés de part et d'autres de mots mémoires avec des adresses adjacentes dans lesquelles il ne serait chargée aucune information. Une telle situation se présenterait en pratique si $\sqrt{ux^2 + vx^2}$, ou si $\sqrt{uy^2 + vy^2}$, ou si $\sqrt{uz^2 + vz^2}$ étaient inférieurs ou égaux à un.

Pour éviter cette situation, au moment de la lecture séquentielle de la mémoire originale 4 pour créer la mémoire des pointeurs, dans le cas où on utilise la compression de traitement avec la mémoire cache, on procédera à une lecture multiple selon un axe choisi, en particulier pour celui dont la résolution n'est pas assez grande. Par exemple, il pourra être décidé, de lire trois fois chacune des trames 256 X 256, de manière à ce que l'on obtienne au total 3 X 88 = 264 coupes. Dans ces conditions, l'algorithme de la figure 6 se déroule normalement, il n'y a plus de problème de sous-échantillonnage.

Il peut par contre se présenter un problème de sur-échantillonnage, si l'un des axes x,y,z d'organisation de la structure 9 est très peu incliné par rapport à la direction de projection W. Par exemple, ceci est le cas sur la figure 1, où l'axe Y est peu incliné par rapport à la direction de projection. Il est donc possible que plusieurs voxels de cette structure se projettent en un même point. Plutôt que d'effectuer le calcul d'adresse dans les pointeurs pour tous ces voxels, sachant que l'information à enregistrer va écraser une information précédemment enregistrée en un même endroit dans la mémoire des pointeurs 5, on peut décider de provoquer une itération avec un saut beaucoup plus important. Par exemple, dans l'instruction 53, l'instruction i = i+1 sera remplacée par une instruction du type i = i+n où n tient justement compte des n voxels de la structure 9 qui se projettent en un même endroit sur le plan 11. On effectue de même le décalage x=x+n à la place de x = x+1. Selon les axes concernés, on effectuera une même démarche, dans les instructions 43 ou 57 respectivement, en ce qui concerne y qui devient y+m et z qui devient z+1.

Par ailleurs, on peut scruter la mémoire 9 selon un mode différent du mode de scrutation décrit jusqu'à présent. Si on scrute par exemple les lignes, dans l'ordre suivant, 14, 24, 70, 71, 72, 73 etc. ...(voir figure 1), on s'assure qu'on explore la structure toujours de l'avant vers l'arrière. Autrement dit, il n'y a plus à calculer de valeur w dès qu'on a chargé un mot mémoire dans le pointeur 5 avec un contenu d'informations égal à une adresse xyz dans la mémoire originale 4. En effet, on peut être sûr que le voxel suivant à charger au même endroit serait plus éloigné de l'écran. Ceci signifie qu'on pourra supprimer alors le test 52. Supprimer le test 52 revient à supprimer un accès à la mémoire originale 4 pour aller lire la valeur g chargée. Là aussi, on gagne encore du temps.

A l'issue du traitement de la figure 6, la visualisation peut être entreprise normalement. On lit alors dans la mémoire 5 les adresses conformément à un mode d'affichage dans l'écran 1. On lit à chaque mot du pointeur 5 une adresse d'un mot dans la mémoire originale 4. A cette adresse originale , on prélève les informations à visualiser. Ce traitement ultérieur est alors du même type que les traitements connus. En effet, il conduit à définir le contenu d'une mémoire d'image 70 dans laquelle, à chaque adresse, on dispose à titre d'information de la grandeur physique mesurée, de l'écart w et des coordonnées du voxel concerné. On peut ainsi, dans une représentation simplifiée, représenter la valeur de grandeur physique, cette valeur étant par ailleurs modulée par l'écart w. Un traitement d'ombrage peut en outre être appliqué en tenant compte soit de la valeur du gradient de la grandeur physique, soit des coordonnées des voxels appartenant à la surface de la partie 8.

## Revendications

1. Procédé de visualisation, sur un écran (1) de visualisation, d'une partie (8) de l'image d'une structure (9) physique,
   - cette structure étant décrite par une collection d'éléments de volume ou voxels (10,18-22), chaque voxel étant représentatif d'une part d'un lieu (x,y,z) dans un espace à trois dimensions, et d'autre part d'au moins une valeur d'une grandeur physique représentative de la structure en ce lieu de l'espace,
   - l'image de la structure étant décrite par une collection de mots mémoires dits originaux d'une mémoire dite originale (4) en relation avec l'écran (1), chaque mot mémoire original de la mémoire originale étant associé, d'une part, à une adresse originale et, d'autre part, à une information originale contenue dans la mémoire originale à l'adresse originale de ce mot,
- les adresses des mots mémoires originaux correspondant aux lieux des voxels dans l'espace à trois dimensions, les informations originales contenues dans la mémoire originale correspondant aux valeurs de la grandeur physique, dans lequel:
- on scrute (16,17) la mémoire originale en adressant les mots mémoires originaux selon un mode de scrutation propre à cette mémoire originale,
- on sélectionne les mots mémoires originaux dont l'information correspond à la partie à visualiser de la structure,
- on calcule pour des mots mémoires originaux sélectionnés des adresses de lieux dans l'écran de visualisation, et on attribue à ces lieux dans l'écran des valeurs d'au moins une grandeur de visualisation liées aux valeurs de la grandeur physique des mots mémoires concernés, et
- on montre sur l'écran l'image ainsi élaborée par la collection de ces lieux dans l'écran, caractérisé en ce que,
- pour calculer (2,3) les adresses des lieux dans l'écran on incrémente (u = u + ux) des adresses précédemment calculées de lieux dans cet écran en ajoutant algébriquement à ces adresses des incréments (ux,uy,uz) dépendant d'une orientation de visualisation de la partie de la structure.

2. Procédé de visualisation, sur un écran (1) de visualisation, d'une partie (8) de l'image d'une structure (9) physique,
- cette structure étant décrite par une collection d'éléments de volume ou voxels (10,18-22), chaque voxel étant représentatif d'une part d'un lieu (x,y,z) dans un espace à trois dimensions, et d'autre part d'au moins une valeur d'une grandeur physique représentative de la structure en ce lieu de l'espace,
- l'image de la structure étant décrite par une collection de mots mémoires dits originaux d'une mémoire dite originale (4) en relation avec l'écran (1), chaque mot mémoire original de la mémoire originale étant associé, d'une part, à une adresse originale et, d'autre part, à une information originale contenue dans la mémoire originale à l'adresse originale de ce mot,
- les adresses des mots mémoires originaux correspondant aux lieux des voxels dans l'espace à trois dimensions, les informations originales contenues dans la mémoire originale correspondant aux valeurs de la grandeur physique, dans lequel:
- on scrute (16,17) la mémoire originale en adressant les mots mémoires originaux selon un mode de scrutation propre à cette mémoire originale,
- on sélectionne les mots mémoires originaux dont l'information correspond à la partie à visualiser de la structure,
- on calcule pour des mots mémoires originaux sélectionnés des adresses de lieux dans l'écran de visualisation, et on attribue à ces lieux dans l'écran des valeurs d'au moins une grandeur de visualisation liées aux valeurs de la grandeur physique des mots mémoires concernés, et
- on montre sur l'écran l'image ainsi élaborée par la collection de ces lieux dans l'écran, caractérisé en ce que, pour montrer l'image élaborée, on crée une mémoire dite des pointeurs (5),
- chaque mot mémoire de la mémoire des pointeurs étant associé à une adresse dite dans le pointeur et à une information dite dans le pointeur,
- une adresse d'un mot dans le pointeur correspondant à une adresse d'un lieu dans l'écran, et une information d'un mot dans le pointeur correspondant à une adresse d'un mot mémoire original dans la mémoire originale.

3. Procédé selon la revendication 2, caractérisé en ce que, pour calculer les adresses des lieux dans l'écran, on incrémente des adresses précédemment calculées de lieux dans cet écran en ajoutant algébriquement à ces adresses des incréments (ux,uy,uz) dépendant d'une orientation de visualisation de la partie de la structure.

4. Procédé selon la revendication 2 ou la revendication 3, caractérisé en ce que pour montrer l'image sur l'écran,
- on adresse les mots dans le pointeur selon un mode conforme à l'affichage, sur cet écran, de valeurs de visualisation,
- on lit, pour chaque mot adressé dans le pointeur, une information dans le pointeur qui renseigne sur une adresse d'un mot mémoire original concerné par l'affichage,
- on lit ensuite l'information contenue dans le mot mémoire original concerné,
- et on détermine une valeur de visualisation à afficher en fonction de ce mot mémoire original.

5. Procédé selon l'une quelconque des revendications 2 à 4, caractérisé en ce que pour créer la mémoire des pointeurs
   - on décrit la structure selon un mode binaire, dépendant du fait que les voxels de cette structure appartiennent ou non à la partie à voir,
   - on transforme cette représentation binaire en une représentation en longueur de parcours (fig4) dans laquelle, selon le mode de scrutation propre de la mémoire originale, des suites de mots mémoires originaux contigus de même genre sont remplacées par des indices entiers qui représentent les nombres de ces mots mémoires originaux contigus identiques dans ces suites,
   - le changement de genre, d'une suite à une autre, étant représenté par la présence de deux indices successifs correspondant respectivement à chacune de ces suites,
   - un premier indice caractéristique (-1) étant en outre affecté à un premier niveau de rupture du mode de scrutation de la mémoire originale,
   - un deuxième indice caractéristique (-2) étant en outre affecté à un deuxième niveau de rupture du mode de scrutation de la mémoire originale,
   - des incrémentations d'adresses précédemment calculées de lieux dans l'écran étant réitérées, identiques à elles-mêmes, en des nombres de fois égaux aux valeurs des indices entiers.

6. Procédé selon la revendication 5 caractérisé en ce que,
   - à un premier niveau de rupture du mode de scrutation, on représente systématiquement un indice correspondant à un genre (vide) prédéterminé, et en ce que
   - les indices caractéristiques sont de préférence algébriques négatifs.

7. Procédé selon la revendication 5 ou la revendication 6, caractérisé en ce que
   - on ne calcule que (48) les adresses de lieux dans l'écran qui correspondent à des mots mémoires originaux d'un seul genre.

8. Procédé selon l'une quelconque des revendications 1 à 7, caractérisé en ce que,
   - pour incrémenter des adresses précédemment calculées de lieux dans l'écran, on ajoute algébriquement à ces adresses des incréments (ux,uy,uz..) dépendant d'une orientation de visualisation de la partie de la structure; ces incréments étant calculés une fois pour toute.

**Patentansprüche**

1. Verfahren zur Sichtbarmachung eines Teils (8) des Bildes einer physischen Struktur (9) auf einem Sichtschirm (1), bei dem
   - diese Struktur durch eine Zusammenstellung von Volumenelementen oder Voxeln (10, 18-22) beschrieben wird, wobei jedes Volumenelement einerseits für eine Stelle (x, y, z) in einem dreidimensionalen Raum repräsentativ ist und andererseits für wenigstens einen Wert einer physikalischen Größe, der für die Struktur an dieser Stelle des Raumes repräsentativ ist,
   - das Bild der Struktur durch eine Zusammenstellung von sogenannten Ursprungsspeicherwörtern eines sogenannten Ursprungsspeichers (4) in Verbindung mit dem Schirm (1) beschrieben wird, wobei jedem Ursprungsspeicherwort des Ursprungsspeichers einerseits eine Ursprungsadresse und andererseits eine Ursprungsinformation zugeordnet wird, die in dem Ursprungsspeicher bei der Ursprungsadresse dieses Wortes enthalten ist,
   - die Adressen der Ursprungsspeicherwörter den Stellen der Volumenelemente in dem dreidimensionalen Raum entsprechen, und die Ursprungsinformationen, die in dem Ursprungsspeicher enthalten sind, den Werten der physikalischen Größe entsprechen, und bei dem man
   - den Ursprungsspeicher abfragt (16, 17), indem man die Ursprungsspeicherwörter gemäß einem für diesen Ursprungsspeicher geeigneten Abfragemodus adressiert,
   - die Ursprungsspeicherwörter auswählt, deren Information dem sichtbarzumachenden Teil der Struktur entspricht,
   - für ausgewählte Ursprungsspeicherwörter Adressen von Stellen in dem Sichtschirm berechnet und diesen Stellen in dem Schirm Werte wenigstens einer Sichtbarmachungsgröße zuordnet, die mit den Werten der physikalischen Größe der betreffenden Speicherwörter verknüpft sind, und
   - auf dem Schirm das so durch die Zusammenstellung dieser Stellen in dem Schirm erzeugte Bild zeigt,
   dadurch gekennzeichnet, daß

- man zur Berechnung (2, 3) der Adressen der Stellen in dem Schirm zuvor berechnete Adressen von Stellen in diesem Schirm schrittweise erhöht (u = u + ux), indem diesen Adressen von einer Sichtbarmachungsorientierung des Teils der Struktur abhängige Inkremente (ux, uy, uz) algebraisch hinzugefügt werden.

2. Verfahren zur Sichtbarmachung eines Teils (8) des Bildes einer physischen Struktur (9) auf einem Sichtschirm (1), bei dem
   - diese Struktur durch eine Zusammenstellung von Volumenelementen oder Voxeln (10, 18-22) beschrieben wird, wobei jedes Volumenelement einerseits für eine Stelle (x, y, z) in einem dreidimensionalen Raum repräsentativ ist und andererseits für wenigstens einen Wert einer physikalischen Größe, der für die Struktur an dieser Stelle des Raumes repräsentativ ist,
   - das Bild der Struktur durch eine Zusammenstellung von sogenannten Ursprungsspeicherwörtern eines sogenannten Ursprungsspeichers (4) in Verbindung mit dem Schirm (1) beschrieben wird, wobei jedem Ursprungsspeicherwort des Ursprungsspeichers einerseits eine Ursprungsadresse und andererseits eine Ursprungsinformation zugeordnet wird, die in dem Ursprungsspeicher bei der Ursprungsadresse dieses Wortes enthalten ist,
   - die Adressen der Ursprungsspeicherwörter den Stellen der Volumenelemente in dem dreidimensionalen Raum entsprechen, und die Ursprungssinformationen, die in dem Ursprungsspeicher enthalten sind, den Werten der physikalischen Größe entsprechen, und bei dem man
   - den Ursprungsspeicher abfragt (16, 17), indem man die Ursprungsspeicherwörter gemäß einem für diesen Ursprungsspeicher geeigneten Abfragemodus adressiert,
   - die Ursprungsspeicherwörter auswählt, deren Information dem sichtbarzumachenden Teil der Struktur entspricht,
   - für ausgewählte Ursprungsspeicherwörter Adressen von Stellen in dem Sichtschirm berechnet und diesen Stellen in dem Schirm Werte wenigstens einer Sichtbarmachungsgröße zuordnet, die mit den Werten der physikalischen Größe der betreffenden Speicherwörter verknüpft sind, und
   - auf dem Schirm das so durch die Zusammenstellung dieser Stellen in dem Schirm erzeugte Bild zeigt,
   dadurch gekennzeichnet, daß
   - man einen sogenannten Markiererspeicher (5) schafft, um das erzeugte Bild anzuzeigen, wobei
   - jedem Speicherwort des Markiererspeichers eine in dem Markierer angegebene Adresse und eine in dem Markierer angegebene Information zugeordnet wird,
   - eine Adresse eines Wortes in dem Markierer einer Adresse einer Stelle in dem Schirm entspricht, und eine Information eines Wortes in dem Markierer einer Adresse eines Ursprungsspeicherwortes in dem Ursprungsspeicher entspricht.

3. Verfahren nach Anspruch 2, dadurch gekennzeichnet, daß man zur Berechnung der Adressen der Stellen in dem Schirm zuvor berechnete Adressen von Stellen in diesem Schirm schrittweise erhöht, indem diesen Adressen von einer-Sichtbarmachungsorientierung des Teils der Struktur abhängige Inkremente (ux, uy, uz) algebraisch hingezufügt werden.

4. Verfahren nach Anspruch 2 oder 3, dadurch gekennzeichnet, daß man zum Anzeigen des Bildes auf dem Schirm
   - die Wörter in dem Markierer gemäß einem der Anzeige von Sichtbarmachungswerten auf diesem Schirm entsprechenden Modus adressiert,
   - für jedes adressierte Wort in dem Markierer eine Information in dem Markierer liest, die Auskunft über eine Adresse eines von der bezeige betroffenen Ursprungsspeicherwortes gibt,
   - anschließend die Information liest, die in dem betreffenden Ursprungsspeicherort enthalten ist,
   - und in Abhängigkeit von diesem Ursprungsspeicherwort einen anzuzeigenden Sichtbarmachungswert festlegt.

5. Verfahren nach einem der Ansprüche 2 bis 4, dadurch gekennzeichnet, daß man zur Erzeugung des Markiererspeichers
   - die Struktur entsprechend einem Binär-Modus in Abhängigkeit davon beschreibt, ob die Volumenelemente dieser Struktur zu dem zu sehenden Teil gehören oder nicht,
   - diese Binär-Darstellung in eine Wegstreckendarstellung (Fig. 4) umwandelt, bei der, entsprechend dem dem Ursprungsspeicher eigenen Abfragemodus, Folgen von aneinandergrenzenden Ursprungsspeicherwörtern der gleichen Art durch ganzzahlige Indices ersetzt werden, die die Anzahlen dieser identischen, aneinandergrenzenden Ursprungsspeicherwörter in diesen Folgen repräsentieren, wobei

- die Änderung der Art von einer Folge zur anderen durch die Anwesenheit zweier aufeinanderfolgender Indices repräsentiert wird, die jeweils einer dieser Folgen entsprechen,
- überdies ein erster charakteristischer Index (-1) einem ersten Unterbrechungsniveau des Abfragemodus des Ursprungsspeichers zugeordnet wird,
- überdies ein zweiter charakteristischer Index (-2), einem zweiten Unterbrechungsniveau des Abfragemodus des Ursprungsspeichers zugeordnet wird, und
- untereinander identische schrittweise Erhöhungen von zuvor berechneten Adressen von Stellen in dem Schirm sovielmal wiederholt werden, wie dies den Werten der ganzzahligen Indices entspricht.

6. Verfahren nach Anspruch 5, dadurch gekennzeichnet, daß man auf einem ersten Unterbrechungsniveau des Abfragemodus systematisch einen Index darstellt, der einer vorbestimmten Art (leer) entspricht, und
    - daß die charakteristischen Indices vorzugsweise algebraisch negativ sind.

7. Verfahren nach Anspruch 5 oder 6, dadurch gekennzeichnet,
    - daß man nur (48) die Adressen von Stellen in dem Schirm berechnet, die Ursprungsspeicherwörtern einer einzigen Art entsprechen.

8. Verfahren nach einem der Ansprüche 1 bis 7, dadurch gekennzeichnet,
    - daß man zum schrittweisen Erhöhen von zuvor berechneten Adressen von Stellen in dem Schirm diesen Adressen von einer Sichtbarmachungsorientierung des Teils der Struktur abhängige Inkremente (ux, uy, uz,...) algebraisch hinzufügt, wobei diese Inkremente ein für allemal berechnet werden.

**Claims**

1. Displaying process, on a display screen (1), of a partial image (8) of a physical structure (9),
    - this structure being described by a collection of volume elements or voxels (10,18-22), each voxel representing on the one hand a place (x,y,z) in a three-dimensional space and on the other hand at least one value of a physical magnitude representing the structure in this place in the space,
    - the image of the structure being described by a collection of memory words termed original memory words of a memory termed the original memory (4) in relation to the screen (1), each original memory word of the original memory being associated on the one hand with an original address and on the other hand with an original information contained in the original memory at the original address of this word,
    - the address of the original memory words corresponding to the places of the voxels in the three-dimensional space, while the original items of information contained in the original memory correspond to the values of the physical magnitude, in which
    - the original memory is scrutinized (16,17) by addressing the original memory words according to a scrutiny method suitable for this original memory,
    - those original memory words are selected of which the information corresponds to that part of the structure which is to be displayed,
    - for original memory words selected addresses are calculated for places in the display screen, and to these places on the screen are attributed values of at least one display magnitude which are bound to the values of the physical magnitude of the memory words concerned and
    - the image thus prepared by the collection of these places on the screen is shown on the screen, characterized by the fact that,
    - to calculate (2,3) the addresses of the places on the screen, addresses previously calculated for places on this screen are incremented (u = u + ux) by adding algebraically to these addresses increments (ux,uy,uz) depending on a display orientation of the part of the structure.

2. Process for displaying, on a display screen (1), a part (8) of the image of a physical structure (9),
    - this structure being described by a collection of volume elements or voxels (10,18-22), each voxel representing on the one hand a place (x,y,z) in a three-dimensional space and on the other hand at least one value of a physical magnitude representing the structure at this place in the space,
    - the image of the structure being described by a collection of memory words termed original words of a memory termed the original memory (4) in relation to the screen (1), each original memory word of the original memory being associated on the one hand with an original address and on the other hand with an original item of information contained in the original memory at the original address of this word,

- the addresses of the original memory words corresponding to the places of the voxels in the three-dimensional space, the original items of information contained in the original memory corresponding to the values of the physical magnitudes, in which
- the original memory is scrutinized (16,17) by addressing the original memory words according to a scrutiny method suitable for this original memory,
- the original memory words are selected of which the information corresponds to that part of the structure which is to be displayed,
- addresses of places on the display screen are calculated for selected original memory words, and values of at least one display magnitude which are bound to the values of the physical magnitude of the memory words concerned are attributed to the said places on the screen, and
- the image thus prepared by the collection of these places on the screen is shown on the screen, characterized by the fact that, in order to show the image prepared, a memory is created which is known as the memory of the markers (5),
- each memory word of the markers memory being associated with an address termed an address in the marker and with an item of information termed an item of information in the marker,
- an address of a word in the marker corresponding to an address of a place on the screen, and an information of a word in the marker corresponding to an address of an original memory word in the original memory.

3. Process in accordance with claim 2, characterized by the fact that in order to calculate the addresses of the places on the screen, addresses previously calculated for places on this screen are incremented by adding algebraically to these addresses increments (ux,uy,uz) depending on a display orientation of a part of the structure.

4. Process in accordance with claim 2 or claim 3, characterized by the fact that in order to show the image on the screen,
- the words in the marker are addressed in accordance with a method suitable for the display, on this screen, of display values,
- for each word addressed in the marker, an item of information is read in the marker which indicates an address of an original memory word concerned by the display,
- the information contained in the original memory word concerned is read,
- and a display value is determined which is to be displayed as a function of this original memory word.

5. Process in accordance with any one of claims 2 to 4, characterized by the fact that in order to produce the memory of the markers,
- the structure is described according to a binary method, depending on whether or not the voxels of this structure belong to the part to be seen,
- this binary representation is converted into a traject length representation (fig.4) in which, according to the scrutiny method appropriate to the original memory, sequences of contiguous original memory words of the same kind are replaced by whole indices which represent the numbers of these identical contiguous original memory words in these sequences,
- the change of type, from one sequence to another, being represented by the presence of two successive indices corresponding respectively to each of these sequences,
- a first characteristic index (-1) being in addition allocated to a first interruption level of the scrutiny method of the original memory,
- a second characteristic index (-2) being in addition allocated to a second interruption level of the scrutiny method of the original memory,
- incrementations of addresses previously calculated of places in the screen being repeated, identical to themselves, in numbers of times equal to the values of the whole indices.

6. Process in accordance with claim 5, characterized by the fact that,
- at first interruption level of the scrutiny process an index is represented systematically which corresponds to a predetermined type (vacant) and by the fact that,
- the characteristic indices are preferably algebraic and negative.

7. Process in accordance with claim 5 or claim 6, characterized by the fact that,
    - only those addresses of places on the screen are calculated (48) which correspond to original memory words of one single type.

8. Process in accordance with any one of claims 1 to 7, characterized by the fact that,
    - in order to increment previously calculated addresses of places on the screen, increments (ux,uy,uz..) are added algebraically to these addresses, depending on a display orientation of the part of the structure, these increments being calculated once and for all.

FIG_1

## FIG_2

G

~23

18    19    20    21    22    L

G

L+1

## FIG_3

| n° col / n° ligne | 0 | 1 | 2 | 3 | 4 |
|---|---|---|---|---|---|
| 0 | | | | | |
| 1 | ▨ | ▨ | | ▨ | |
| 2 | | ▨ | ▨ | ▨ | |
| 3 | | ▨ | ▨ | ▨ | ▨ |
| 4 | | | | | |

## FIG_4

| Liste | −1, | 0,2,1,1,−1, | 1,3,−1 | , 1,4,−1 | , −1,−2,−3 |
|---|---|---|---|---|---|
| Ligne | 0 | 1 | 2 | 3 | 4 |

```
                    ┌─────────┐
                    │ DEBUT   │
                    └────┬────┘
                         │
                         ▼
         NON      ┌──────────────┐         ┌──────┐
    ◇ Z₀≤ ʒ <Z₁ ──────→│ NLONG = -3  │────────→│ FIN  │
         25              └──────────────┘         └──────┘
         │ OUI                 36
```

$Z_0 \leqslant \mathfrak{z} < Z_1$   NON → NLONG = -3   25   OUI   36 → FIN

$$\mathfrak{z} = \mathfrak{z}+1$$
$$y = y_0$$
$$x = x_0$$
35

$Y_0 \leqslant y < Y_1$   NON → NLONG = -2   26   OUI   34

$$32$$
$$y = y+1$$
$$x = X_0$$

ETAT = 0
LONG = 0
27

NLONG = -1
31

$X_0 \leqslant x < X_1$   NON   ETAT = 1   NON
28   OUI   37   OUI

NLONG = LONG
38

$I \neq ETAT$   NON
29   OUI

NLONG = LONG
Change ETAT
LONG = -1
33

LONG = LONG + 1
x = x + 1
30

FIG_5

DEBUT

$u = u_0$
$v = v_0$
$w = w_0$
$x = X_0$
$y = Y_0$
$z = Z_0$
$unl = u = uni$
$vnl = v = vni$
$wnl = w = wni$
$p(u\,v) = (0,0,0) \forall u,v$
$w(u,v) = \infty \; \forall u,v$

40

LIRE NOUVEAU NLONG

41

42 NLONG < 0 — NON

DEBUT    OUI

46

$u = u + NLONG.u_x$
$v = v + NLONG.v_x$
$w = w + NLONG.w_x$
$x = x + NLONG$

LIRE NOUVEAU NLONG

47

48 NLONG < 0 — NON

SEGMENT VIDE    OUI

$i = 1$  49

50 $i \leqslant NLONG$ — NON

OUI  51

$u\,v$ dans l'écran — NON

OUI  52

$w(u,v) > w$ — NON

OUI

$W(u\,v) = w$
$P(u\,v) = (x,y,z)$
$u = u + ux$
$v = v + vx$
$w = w + wx$
$i = i + 1$
$x = x + 1$

53

SEGMENT PLEIN

LIRE NOUVEAU NLONG

54

55 NLONG < 0 — NON

OUI

FIN DE LIGNE

$unl = upl + uy$
$vnl = vnl + vy$
$wnl = wnl + wy$
$x = X_0$
$y = y + 1$
$u = unl$
$v = vnl$
$w = wnl$

43

LIRE NOUVEAU N LONG

44

45 NLONG $\geqslant$ 0 — NON

OUI

$uni = uni + uz$
$vni = vni + vz$
$wni = wni + wz$
$x = X_0$
$y = Y_0$
$z = z + 1$
$unl = uni$
$vnl = vni$
$wnl = wni$
$u = unl$
$v = vnl$
$w = wnl$

57

LIRE NOUVEAU NLONG

58

59 NLONG $\geqslant$ 0 — NON    59 N LONG < -2 — NON

FIN DE TRAME

OUI    OUI

56 NLONG < -1 — NON

OUI

FIN

FIG_6